# EUROPEAN PATENT APPLICATION

(11) **EP 4 459 134 A1**
(43) Date of publication of application: **06.11.2024**
(21) Application number: 23315163.8
(22) Date of filing: 05.05.2023
(51) Int. Cl.: F16B 1/00

(54) **A FASTENING ELEMENT MADE OF A SHAPE MEMORY POLYMER, A CONNECTION OF COMPONENTS THEREWITH AS WELL AS A CONNECTING METHOD FOR THESE COMPONENTS**

(71) Applicant: Bollhoff Otalu S.A., 73490 La Ravoire (FR); Böllhoff Verbindungstechnik GmbH, 33649 Bielefeld (DE)
(72) Inventor: HERTEL, Alexander, 49328 Melle (DE); LEJARS, Patrick, 38530 Barraux (FR); JEANNIN, Alexandre, 39260 Martigna (FR)
(74) Representative: HWP Intellectual Property

(57) **Abstract**

The present invention relates to a fastening element 30 made of a shape memory polymer and being adapted for connecting at least a first component A with a first component opening a and a second component B with a second component opening b with each other, by arranging the fastening element 30 in a first condition of the shape memory polymer in at least the first and the second component opening a, b and after that, transferring it from the first condition to a second condition as a reaction to a defined stimulus, so that in the second condition, the fastening element 10 has at least a larger outer diameter than in the first condition, wherein in the first condition, the fastening element 30 comprises the following features: a) a hollow-cylinder like base body 32 with a circumferential outer wall 34 and a circumferential inner wall 36; b) at least at one axial end, the hollow-cylinder like base body 32 comprises an entry hole into an inner channel 16, passing through, preferably entirely, the hollow-cylinder like body; c) the hollow-cylinder like base body 32 has a cross sectional form with a polygonal outer rim 38 and a central opening of the inner channel 16, with the cross-sectional form of the fastening element 30 having a larger radial wall thickness T₁₀ between the central opening 16 and the outer rim 38 in the second state than in the first state.

## Description

### 1. Field of the invention

The present invention relates to a fastening element made of a shape memory polymer as well as to a connection of several components realized therewith. The fastening element is adapted to connect at least two components with each other. To this end, the fastening element is inserted into a respective component opening of the components and thereafter the shape memory polymer of the fastening element is transferred into a second condition initiated by a stimulus.

### 2. Background of the invention

In the background art, fasteners of different type, construction and function are known which are made of shape memory polymers (SMP). WO 2010/117982 describes a threaded anchor for fixing a tissue graft within a hole of a bone. The anchor has threads on an outer surface, and it is made of a polymer material including shape memory qualities. By providing energy to the anchor, the anchor deforms supporting fixation of the anchor to the bone. Upon deformation of the anchor, the threads of the anchor are reduced thereby increasing contact between the anchor and the tissue graft.

JP 2009 068570 A also discloses a male type fastening body made of a shape memorable resin. It includes a columnar shaft part having a male screw part formed on an outside surface. The fastening body has a plurality of long diameter parts extending in parallel to the central axis of the shaft part. Furthermore, it has a plurality of short diameter parts positioned between the long diameter parts and having a shorter distance from the axis than the long diameter part. The male screw part formed on the outside surface of the long diameter part.

A fastening function-vanishing form is revealed by heating the shape memorable resin to the predetermined temperature or higher. In the fastening function-vanishing form, the shaft part is formed in a substantially columnar shape having a radius a3 larger than a radius a2 of the short diameter part and smaller than a radius a1 of the long diameter part, and does not have the male screw part on the outside surface.

The above mentioned shape memory polymers or resins are materials known in the art that have shape memory effects. The polymer is processed to receive a permanent shape and is then deformed into a temporary shape using a program process. Typically, this process involves heating up the polymer, deforming it, and then cooling it down, for example. Once programmed, the polymer is fixed in its temporary shape, but the permanent shape is essentially stored. Subsequently heating up the polymer above its transition temperature causes the polymer to revert back to its permanent shape, and cooling down solidifies the material.

Shape memory polymers are activated differently by a stimulus that causes the polymer to revert from a temporary shape back to a stored permanent shape of the material. Although the shape memory polymer changes shape, it does not absorb an agent and essentially maintains the same volume.

DE 30 37 087 A1 discloses a material strang made of a shape memory polymer. It is shaped like a rod or a tube so that it can be inserted in a component opening. To connect a first and a second component, each having a component opening, the tube made of shape memory polymer is arranged within these openings. Thereafter, a stimulus of the shape memory polymer initiates a transfer from an installation condition to an expanded second condition. Based on a radial expansion of the tube, it is clamped within the component openings. Thereby, the two components are connected to each other. Although the tube material expands within the component openings, the frictional connection to the inner wall of the component openings does not provide a long lasting and satisfying connection.

Therefore, it is an object of the present invention to provide an alternative fastening element for reliably connecting at least two components having a component opening respectively.

### 3. Summary of the invention

The above object is solved by a fastening element according to independent claim 1 as well as a connection of several components by means of the fastening element according to independent claim 11. Further preferred embodiments and developments result from the following description, the drawings as well as the appending claims.

The present invention relates to a fastening element made of a shape memory polymer and being adapted for connecting at least a first component with a first component opening and a second component with a second component opening with each other, by arranging the fastening element in a first condition of the shape memory polymer in at least the first and the second component opening and after that, transferring the shape memory polymer from the first condition to a second condition as a reaction to a defined stimulus, so that in the second condition, the fastening element has at least a larger outer diameter than in the first condition, wherein in the first condition, the fastening element comprises the following features: a. a hollow-cylinder like base body with a circumferential outer wall and a circumferential inner wall, b. at least at one axial end, the hollow-cylinder like base body comprises an entry hole into an inner channel, passing through, preferably entirely, the hollow-cylinder like body, c. the hollow-cylinder like base body has a cross sectional form with a polygonal outer rim and a central opening of the inner channel.

The inventive fastening element is made of a shape memory polymer which is generally known in the art. Based on a preferred elongated structure of the hollow-cylinder like base body, the fastening element can be easily installed in several component openings of components to be connected to each other. The several components are connected by stimulating this shape memory polymer of the fastening element after installation so that the fastening element expands and/or anchors itself in the respective component openings. The preferred anchoring is realized by a preferred combination of a frictional or a non-positive connection and a positive connection between the fastening element and the component opening, respectively.

Due to the radial expansion of the fastening element within the component opening, the fastening element is clamped against the inner wall of the component opening, respectively. Outside the component opening, the fastening element expands at least partly beyond the inner wall of the component opening after stimulation. Thereby, a positive fit is realized between the fastening element and at least one of the components to be connected.

The undeniable advantage of this solution is the possible installation and simultaneous locking in position of many fastening points, thus considerably reducing assembly costs. The fastening element concerned can also provide and support additional functions more conventional and common to fastening elements.

The invention relates to an assembly element made of the shape memory material, preferably a polymer consisting of several molecular chains linked by nots or van der Waals bonds. These bonds are sensitive to stimuli external to the structure of the product and soften as a function of the temperature at which the material is heated.

The thermoplastic material can be based on the urethan matrix composed of isocyanat and polyol, or on an acrylate matrix, the main factor of choice being the working temperature, more or less above or below the glassy transition temperature, depending on the application. Such material choices are generally known in the art and can be adapted to the respective situation of the application of the fastening element.

The inventive fastening element has a preferred elongated structure which is based on a hollow-cylinder like base body. The elongated structure supports an installation process of the fastening element within the component opening.

The cross-sectional shape of the hollow cylindrical base body in the not yet stimulated condition is qualified by the polygonal outer rim. The not yet stimulated condition of the shape memory polymer is also denoted as the shape or condition of the fastening element after programming. The programmed shape denotes a simplified form of the fastening element being easy to handle or process. Based on a stimulus, like a thermal energy or another type of energy, the fastening element of the programmed shape changes its shape into an initial shape before programming.

According to a preferred embodiment of the present invention, certain dimensions of the cross-sectional form of the fastening element in the programmed or first state are different as compared to the initial or second state after applying the stimulus. In particular, it is supportive for establishing a connection between the fastening element and the component, respectively, if after stimulation a wall thickness of the cross-sectional form of the fastening element is larger than in the not yet stimulated state. As a consequence and preferred, the cross-sectional form of the fastening element having a larger radial wall thickness between the central opening and the outer rim in the second state than in the first state.

According to preferred embodiments of the present invention, the polygonal outer rim may have a triangular or a square or a pentagonal shape. The vertices of the angular shape or form define a maximum envelope of the fastening element to be introduced in the component opening.

The faces or sides of the fastening element as visible in the polygonal outer rim form a reduced shape or extension of the fastening element. The sides are preferably adapted to allow an outside or radial expansion of the fastening element out of the reduced shape after programming into the initial shape of the shape memory polymer. The expansion is considered with respect to a longitudinal center axis of the fastening element.

A radial wall thickness is defined by the distance between the inner and the outer circumferential wall of the fastening element. This radial wall thickness is smaller within the programmed state of the fastening element as compared to the wall thickness in the initial state of the shape memory polymer.

According to a preferred embodiment of the fastening element, the polygonal outer rim consists of a first and a second plurality of sides having equal length, respectively, with the first and the second plurality each comprising at least three sides.

The polygonal shape of the outer rim of the fastening element after programming facilitates installation of the fastening element within component openings. Furthermore, the different pluralities of sides allow for a different functional programming of the sides of each plurality.

Preferably, a first plurality of sides is used to cover or inherently have respective vertices which expand or grow upon stimulation.

Further preferred, a second plurality of sides is adapted to produce essentially straight sides upon stimulation. These preferred essentially straight sides realize an increased or enlarged contact surface with the inner opening wall. The enlarged contact surface is compared to the outer polygonal surface of the programmed state.

Preferably, the sides of equal length of the first plurality are shorter than the sides of equal length of the second plurality as well as sides of equal plurality do not adjoin each other.

According to a preferred embodiment of the invention, the polygonal outer rim of the cross section is formed by different pluralities of essentially equal sides. Essentially equal means that the sides of the same plurality have the same length. Based thereon, the outer shape or conture of the hollow-cylinder like base body is qualified by a certain combination of pluralities of sides. The pluralities of sides are preferably combined in such a way, that facilitated insertion or installation of the fastening element in the programmed state is merged with a reliable anchoring and supporting of the fastening element and the components after stimulation.

According to a further preferred embodiment of the fastening element, individual vertices which are directed to the radial outside are formed in the outer rim from the sides of equal length of the second plurality if the shape memory polymer of the fastening element was transferred in the second condition.

Further preferred, the hollow cylinder like base body of the fastening element has a functional structure projecting to the radial outside, which extends at least over axial partial portions of the fastening element.

According to a preferred embodiment of the present invention, a functional structure is provided at the radial outside of the base body in the state after programming. The functional structure serves for facilitating and installation of the fastening element in the component opening.

Further preferred, the functional structure facilitates an arrangement of components at a certain distance to each other.

According to another preferred embodiment of the present invention, the functional structure allows for a precise installation of the fastening elements within the component opening before introducing the stimulus.

According to another preferred embodiment of the present invention, the functional structure of the fastening element has a plurality of band-like webs a. extending around the inner channel in multiple segments, with individual segments being arranged to each other with an axial offset, or b. extending helix-like around the inner channel.

Additionally preferred, the functional structure of the fastening element comprises a plurality of radial steps being arranged in axial direction and having different radial heights.

According to another preferred embodiment of the present invention, the at least one entry opening of the fastening element into the inner channel has a thread insert for mounting a threaded element.

According to a further preferred embodiment of the present invention, the inner channel is used for receiving and mounting a connecting element fixing a further component to the fastening element. Thus, the fastening element additionally provides a mounting structure to mount a component thereon.

To this end, the at least one opening of the inner channel comprises a threaded insert which is generally known in the art. Such a threaded insert may provide an inner thread or an inner connection structure for mounting the connecting element. Alternatively, such a threaded insert is formed by a wire threaded insert inserted into an inner thread of the inner channel.

Preferably, the fastening element has a circumferential collar being provided at an axial end of the fastening element.

According to a further preferred embodiment of the present invention, the fastening element has a circumferentially extending collar. The collar provides a supporting side for abutting an adjacent component. Such a collar preferably simplifies the installation of the fastening element within the component opening since the collar limits an installation depth of the fastening element within the component opening.

Furthermore, the collar serves as a support for fastening a further component by means of the connecting element mounted within the inner channel of the fastening element.

Further preferred, the circumferential collar comprises a sealing element so as to establish a sealing by means of a component abutting the collar.

The present invention further provides a connection of a first component with a first component opening and a second component with a second component opening with a fastening element according to one of the above-described constructions, which is arranged in the first and in the second component opening and has been transferred into the second condition.

Preferably, the connection comprises a third component which is mounted to the fastening element in which a connecting element has been fastened in the inner channel through a third fastening opening in the third component.

The present invention further provides a method for fastening at least two components having a component opening, respectively, to each other, preferably in a spaced apart relation, by means of a fastening element according to one of the above described constructions. The method comprises the following steps: a. arranging the at least two components such that the component openings are aligned to each other, b. inserting the fastening element into the at least two component openings, c. applying a defined stimulus to the fastening element inserted into the component openings, preferably thermal energy, so that the fastening element is transferred to the second condition and the fastening element expands laterally beyond the component openings, thereby locking the components in position.

As already described above, the fastening element is used to connected a plurality of components , i.e. at least two components, to each other. To this end, these components each have a component opening. The component opening respectively is adapted to receive the fastening element. Before applying a stimulus to the fastening element within the component openings, the components are positioned to have a defined distance to each other. According to a preferred alternative, the components to be connected are spaced apart from each other. The fastening element is also used to fasten several components in close relation to each other or abutting each other.

During stimulation of the shape memory polymer of the fastening element, the fastening element anchors or fastens itself within the component openings. Based on the lateral expansion of the fastening element in the stimulation phase, the fastening element generates a friction-type connection with each component. Furthermore and based on the lateral expansion of the fastening element, the fastening element is anchored in the component openings, respectively.

According to a preferred embodiment of the fastening method, the stimulating step involves heating the fastening element approximately 10 ° above the glass transition temperature of the shape memory polymer of the fastening element.

As further preferred, the method comprises the further step: arranging a further component having a component opening adjacent to an entrance opening to the inner channel of the fastening element and fastening the further component to the fastening element by means of a connecting element extending through the component opening of the further component and into the inner channel of the fastening element.

The fastening element has in inner channel which is preferably open at least from one axial end of the fastening element. The entrance opening into the inner channel is used for receiving a connecting element within the inner channel to mount a further component to the fastening element. Based on the constructive combination of the further component and the fastening element, the further component is connected to the fastening element by means of generally known connecting element, but not by stimulating the shape memory polymer of the fastening element.

According to another preferred embodiment of the fastening method, it comprises the further step of enabling positioning of the components on the fastening element by means of a collar surrounding the fastening element.

### 4. Short description of the drawings

In the following, the present invention will be described in detail based on the drawings. In the drawings, the same reference signs denote the same elements and/or components. It shows:
- Figure 1: a preferred cross-section of the fastening element in the initial state,
- Figure 2: a preferred cross-section of the fastening element in the initial state and in the programmed state as well as an illustration of the transfer of the fastening element between these two states,
- Figure 3 a to d: a preferred embodiment of the fastening element in a) a perspective view, b) a side view, c) a sectional view, and d) in a connection with the components A, B,
- Figure 4 a to d: a further preferred embodiment of the fastening element in a) a perspective view, and b) a side view, c) a sectional view, and d) in a connection with the components A, B, C,
- Figure 5 a to e: a further preferred embodiment of the fastening element a) in a perspective view, b) in a side view, c) in the initial state, d) in a connection with the components A, B, C, and e) in a connection with the components A, B, C in the initial state,
- Figure 6 a to d: a further preferred embodiment of the fastening element a) in a perspective view, b) in a side view, c) in a sectional view, and d) in a connection with the components A, B, C
- Figure 7 a to d: a further preferred embodiment of the fastening element a) in a perspective view, b) in a side view, c) in a sectional view in the initial state, and d) in a connection with the components A, B, D,
- Figure 8 a to d: a further preferred embodiment of the fastening element in a) a perspective view, b) in a side view, c) in a sectional view, and d) in a connection with the components A, B, C, D, E,
- Figure 9 a to d: a further preferred embodiment of the fastening element in a) a perspective view, b) a side view, c) a sectional view, and d) a connection with the components A, B, C, D, E,
- Figure 10 a to d: a further preferred embodiment of the fastening element in a) a sectional view, b) a further sectional view, c) a connection with the components A, B, C, and d) a further connection with the components A, B, C, D, E.

### 5. Detailed description of preferred embodiments

The present invention provides a fastening element 10 which is made of a shape memory polymer. Such materials are generally known and may be chosen dependent on the environmental condition as well as the preferred stimulus.

According to a preferred material choice of the present invention, a cross-link polymer is used, as for example polyacrylate. A cross-linked polymer is a polymer with chains linked together by a network of covalent bonds. In most polymers, these cross-links are short, and their properties depend mainly on the degree of cross-linking. To be precise, if the degree of cross-linking is low, the polymer will behave like a non-cross-linked polymer and exhibit softening behavior. However, if the degree of cross-linking is high, the softening behavior of the polymer will be much harder.

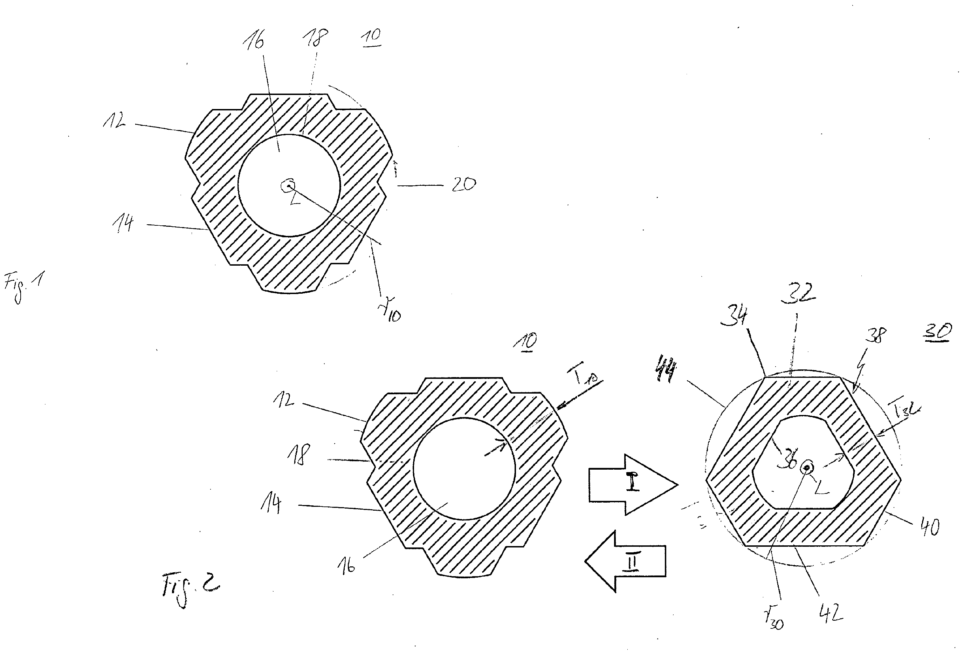

The fastening element 10 is made of the shape memory polymer in an initial state as exemplary shown in figure 1. The fastening element 10 in the initial state preferably has a plurality of vertices 12 and a plurality of faces or sides 14.

The fastening element 10 has a combined fastening function. According to a first functional fastening aspect, the fastening element 10 connects a plurality of components A, B, C upon insertion and expansion in respective component openings a, b, c. This function can also be denoted as a self-connecting function since the fastening element 10 connects the components A, B, C by its inherent material properties without using an additional connecting element.

Furthermore, the fastening element 10 provides a second functional fastening aspect by means of an inner channel 16 for receiving and retaining an individual connecting element 90. The inner channel 16 is available in the fastening element 10 of the initial state as well as in the fastening element 30 of the programmed state (also called first condition).

The inner channel 16 has a circumferential inner wall 18. According to different preferred embodiments of the present invention, the circumferential inner wall 18 has an inner thread or a latching mechanism or a straight wall for receiving a self-cutting thread of the connecting element 90. It is furthermore preferred to incorporate a thread insert in the inner wall 18. To this end, such a thread insert is preferably positioned adjacent to at least one open end leading into the inner channel 16. Dependent on the construction of the fastening element, the inner channel 16 may have one or two openings leading into the inner channel 16.

As shown in figure 1, the fastening element 10 in the initial stage corresponding to the second condition of the material has a number of sides 14. The sides 14 preferably form and provide contact surfaces to abut component walls, as for example an inner wall of the component opening a; b; c receiving the fastening element 10.

Based on a stimulus, e.g. a thermal energy, or the like, the sides 14 are preferably at least partly radially outwardly shifted with respect to a longitudinal middle axis L of the fastening element 10. Thereby, the sides 16 are forced against the inner wall of a component opening a; b; c supporting a frictional connection between the fastening element 10 and the respective component A; B; C.

Further preferred, the fastening element 10 of the initial state and as illustrated in a cross-sectional view (see figure 1) has a number of vertices 12. These vertices 12 are projecting radially outwardly. These vertices 12 also increase contact and retaining forces to the component A; B; C if stimulated in the fastening element of the programmed state or first condition.

Referring to figure 1, the cross-sectional illustration of the fastening element 10 in the initial state is surrounded by a circle 20. The circle 20 has a radius ending at the vertices 12.

During a programming phase of the shape memory polymer of the fastening element 10, a volume of the fastening element 10 in the initial state is reduced. To this end, the material of the fastening element 10 is preferably heated up to a temperature of about 10° higher than the glass transition temperature of the shape memory polymer. At the same time, mechanical stresses are applied to the fastening element 10 for deformation and programming of the shape memory polymer. During programming, the fastening element 10 of the initial state is deformed into a fastening element 30 in the programmed state, also denoted as first state. A cross-sectional illustration of the fastening element 30 in the programmed state is shown in figure 2 in the right part. The upper arrow 1 denotes the way of deformation during programming.

During the programming phase, the best results were achieved with preferably 15% to 20% compression deformation of the external volume of the fastening element 10.

The fastening element 30 of the programmed state has a hollow-cylindrical base body 32. The cross-sectional shape of the base body 32 is shown in figure 2, right part. The hollow-cylindrical base body 32 has a circumferential outer wall 34 as well as a circumferential inner wall 36. The inner channel 16 has at least one entry hole at an axial end of the fastening element 32 in the programmed state.

Preferably, the circumferential outer wall 34 of the base body 32 forms a polygonal outer rim 38 having a central opening into the inner channel 16 (see figure 2 right part).

The polygonal rim 38 as well as the circumferential outer wall 34 preferably comprise a first and a second plurality of sides 40, 42. Further preferred, the sides 40 are shorter in length as compared to the sides 42.

Figure 2, right part, shows the cross-section of the base body 32. The cross-section of the base body 32 is surrounded by a circle 44. The circle 44 has a radius being smaller than the radius 20 surrounding the cross-section of the fastening element 10 in the initial stage. The difference of the size or radius of the circles 20, 44 illustrates the volume deformation and reduction by programming the fastening element 10 starting from the initial state.

The smaller radius of the circle 44 preferably illustrates a minimum radius of the component opening a; b; c for receiving the fastening element in the programmed state, i.e. the hollow-cylinder-like base body 32. Based on the minimum radius of the component opening a; b; c allowed for receiving the base body 32, the fastening element 10 is reliably retained within the component opening a; b; c after stimulation and transfer into the initial state of the fastening element 10.

According to a preferred embodiment of the present invention, the vertices 12 of the initial state are deformed or compressed into the longer sides 42. Further preferred, the sides 14 of the initial state are deformed or compressed into the shorter sides 40 of the polygonal outer form of the base body 32.

Upon applying a stimulus (see lower arrow II in figure 2), preferably a thermal energy, the hollow-cylindrical base body 32 grows or enlarges within the respective component opening a; b; c thereby fastening and/or anchoring the fastening element 10 within the component opening a; b; c. Only in the space not limited by a component opening a; b; c, the fastening element 10 may preferably return to its initial state and shape. Based on the combination of the free expansion into the initial state outside an opening and the clamping expansion within an opening a; b; c, the fastening element 10 preferably realizes a positive connection in combination with a non-positive connection with the component A; B; C to be connected. The above is also illustrated by a preferred comparison of a radial wall thickness T₃₂ in the area of the longer sides 42 corresponding to a radial wall thickness T₁₀ in the area of the vertices 12. Accordingly, T₁₀ is larger than T₃₂.

Although the accompanying drawings show a polygonal rim 38 of the base body 30 having six corners (cross-sectional hexagon), the cross-section of the base body may have at least three corners and more.

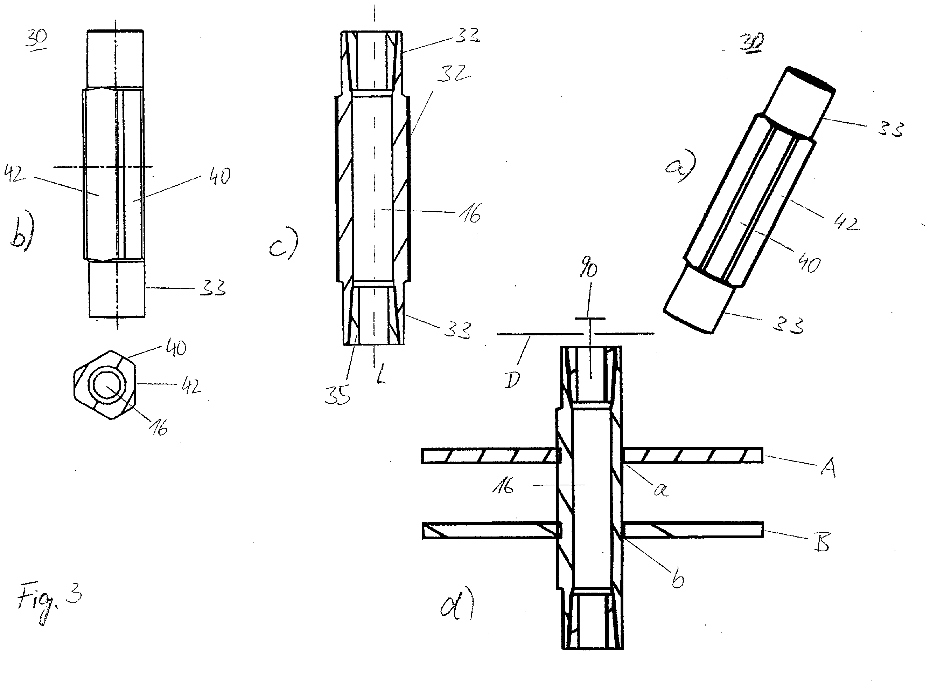

Figure 3 shows a preferred embodiment of the fastening element 30 in the programmed state. The fastening element 30 has the hollow cylindrical base body 32 showing the polygonal shape (see above). The cylindrical base body 32 axially extends at least on one axial end in a hollow thread shaft 33. According to the preferred embodiment of figure 3, the fastening element 30 has two hollow threaded shafts 33.

The hollow thread shaft 33 provides a receiving inner thread 35 for a connecting element 90. Based thereon, a further component D can be connected to the fastening element 10/30 by screwing the connecting element 90 via the hollow thread shaft 33 into the inner channel 16 (see figure 3d).

The receiving inner thread 35 is preferably formed in the inner wall of the thread shaft 33. Alternatively, it is provided by a thread insert or it is self-cut by a screw while screwing in the thread shaft 33.

Further preferred, the thread shaft 33 is not changed in shape and/or size while programming the fastening element 10. Thus, it does essentially not change upon applying a stimulus.

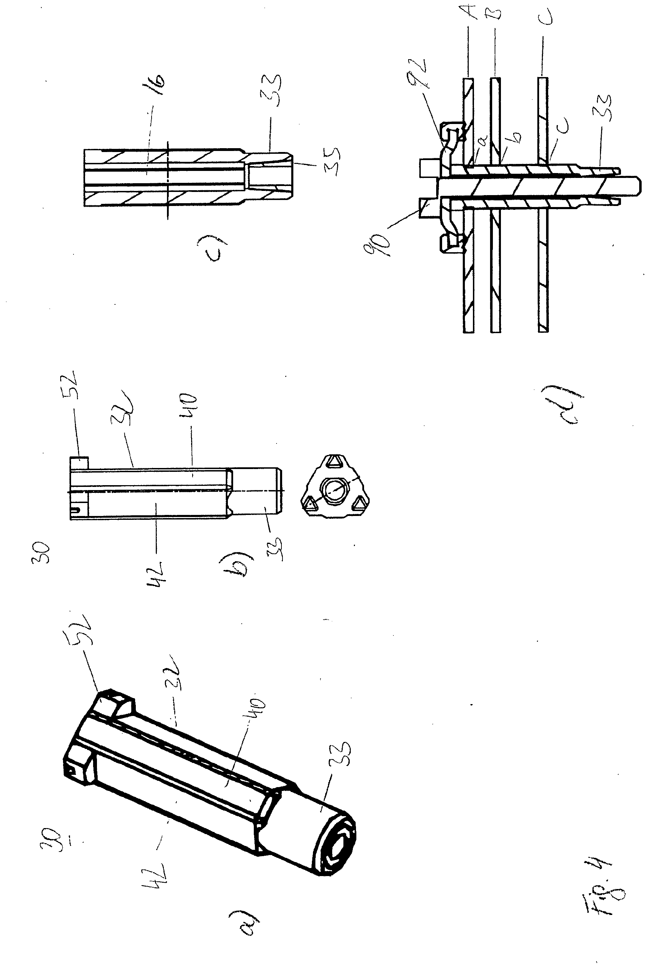

Figure 4 shows a preferred embodiment of the fastening element 30 in the programmed state which is similar to the embodiment as shown in figure 3. Instead of the thread shaft 33, it has a circumferentially extending collar 52 at one axial end of the cylindrical base body 32. The collar 52 has cut-outs or completely surrounds the opening into the inner channel 16.

According to a preferred embodiment of the invention, the collar 52 is not programmed into the smaller sized base body 32 thereby radially extending beyond the polygonal outer wall of the base body 32. Upon applying a stimulus, the base body 32 preferably enlarges up to the radius size of the collar 52.

The connecting element 90 preferably extends through the complete inner channel 16 to be fastened within the thread shaft 33. It is also preferred to fasten the connecting element 90 at the opposite axial side/end of the fastening element.

The connecting element 90 is preferably used to position and fasten a sealing element 92 on the fastening element 10/30. The sealing element 92 is pushed against the adjacent component A to realize the sealing function.

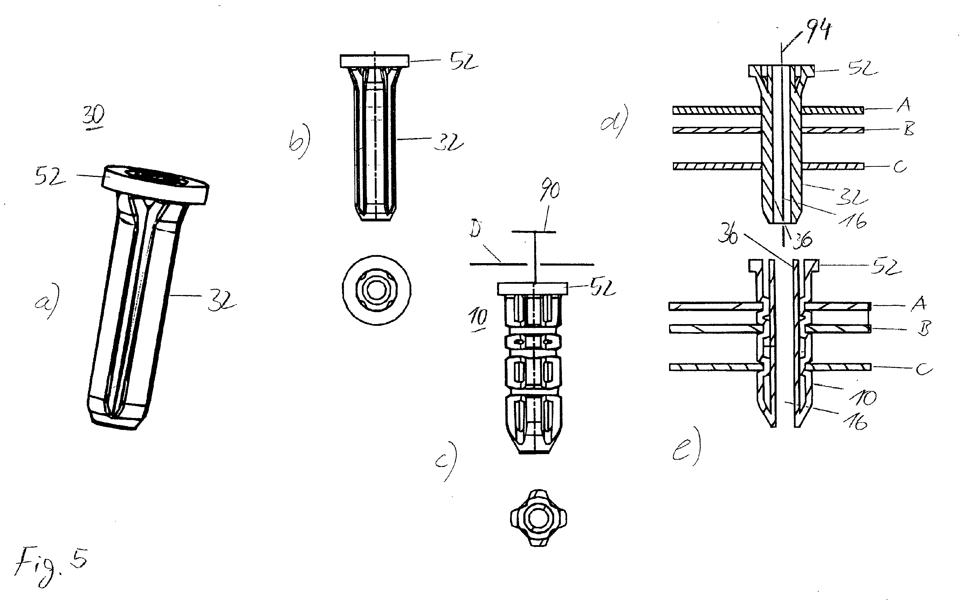

Figure 5 shows a further preferred embodiment of the fastening element 10. Figure 5a shows the base body 32 having a surrounding collar 52. Preferably, the collar 52 is not programmed so that it does not change the size and position upon applying a stimulus. This fact is illustrated by figure 5c showing the fastening element 10. The collar 52 preferably functions as a support for connecting a further component D to the fastening element 10/30 by a connecting element 90.

Preferably, the circumferential inner wall 36 is formed as a solid wall of the base body 32. After stimulation of the base body 32, the inner wall 36 limits a partly hollow inner structure of the fastening element 10.

Besides receiving a connecting element 90, the inner channel 16 is preferably used for guiding at least one cable in a protected manner through the components A; B; C.

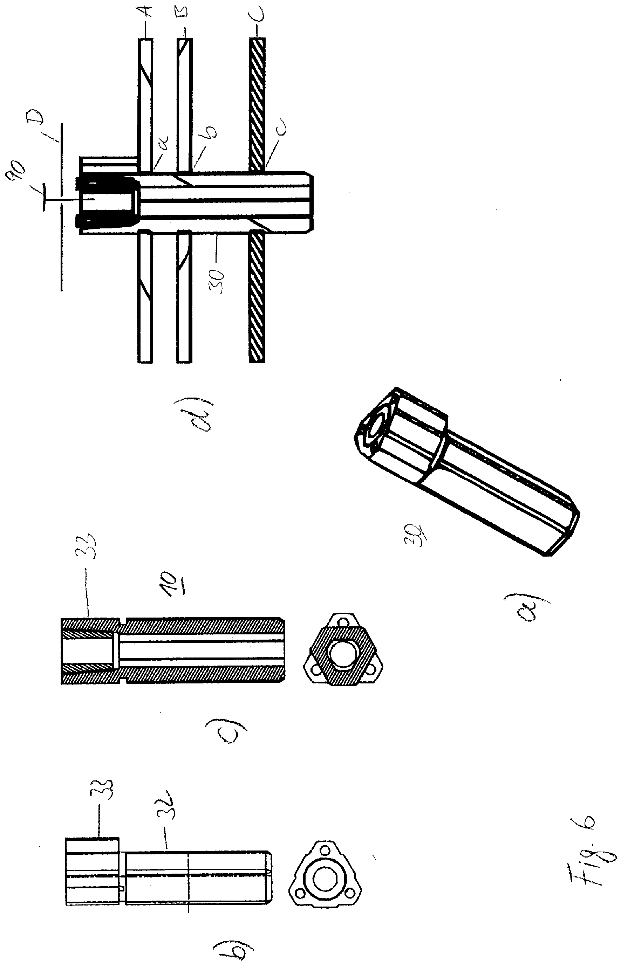

Figure 6 shows a further preferred embodiment of the fastening element 10/30. It has only one thread shaft 33. The thread shaft 33 preferably extends radially beyond the base body 32 to provide an undercut and support for the adjacent component A. With respect to the shape and configuration, it is similar to the embodiment of figures 3 to 5.

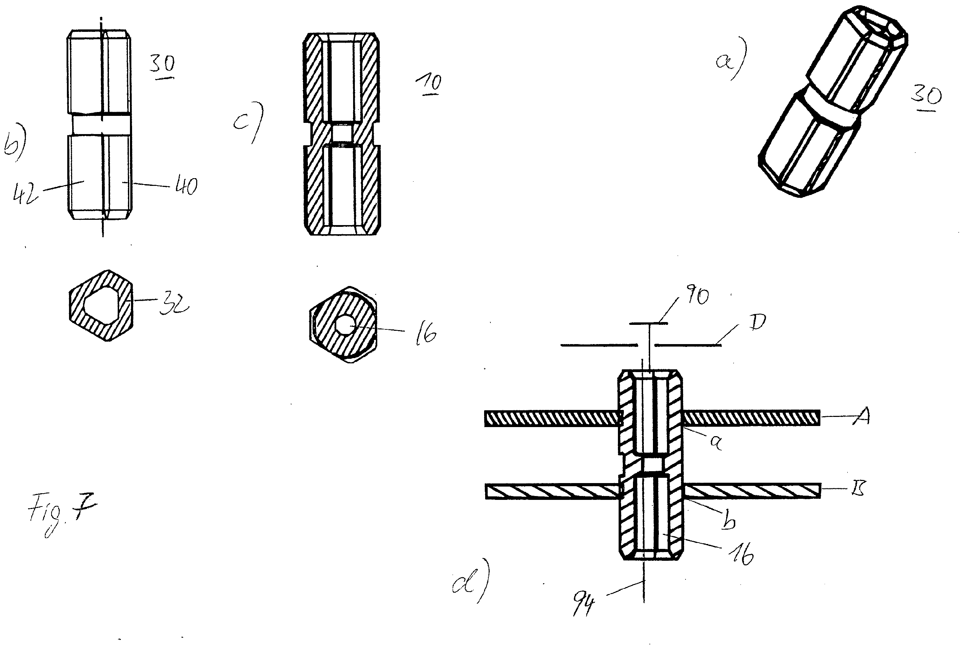

Figure 7 shows a preferred embodiment of the fastening element 30 in the programmed state (figure 7a) and the fastening element 10 in the state after applying a stimulus (figure 7c, d). The fastening element 30 is installed and fastened in the component openings a, b of the components A, B. Further, the fastening element 10 is used for connecting a further component D by means of a connecting element 90 as described above (figure 7d). Alternatively preferred, the fastening element 10 is used for guiding cables 94 through the inner channel 16.

In order to simplify a handling and/or processing and/or installation of the fastening element having the base body 32 within the at least two component openings a, b, c, the base body 30 preferably has a functional outer structure 50. The functional outer structure 50 projects radially outwards from the base body 32 with respect to the longitudinal center axis L of the base body 32.

The functional outer structure 50 forms an inherent part of the fastening element 30 in the programmed state. Preferably, the function of the structure 50 facilitates an insertion and suitable positioning of the fastening element 30 in the component openings a, b, c. Thereby, it is preferably assured that the components A, B, C to be connected are positioned in such a distance to each other as intended for the later connection.

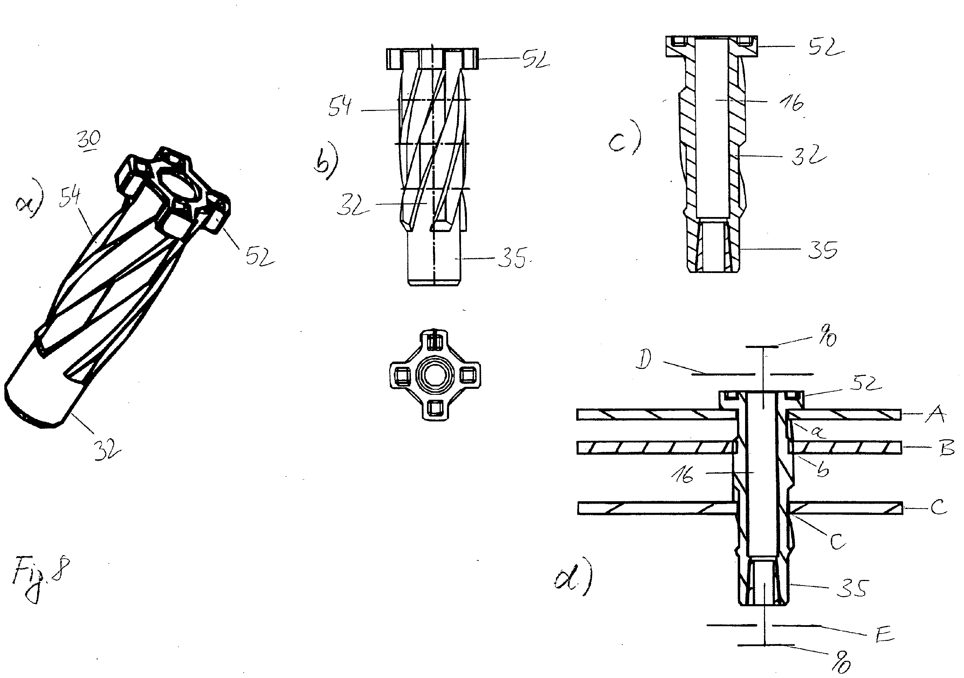

Figure 8 shows a further preferred embodiment of the fastening element 30. It has essentially the same features as described with respect to the embodiment of figure 4. In addition to that, the fastening element 30 has helically extending ribs or webs 54 extending on the outer wall 34 in axial direction of the fastening element. The helically extending ribs or webs 54 preferably function like an outer thread of the base body 32. Thereby, these ribs 54 facilitate the positioning of the fastening element 30 within the component opening a; b; c.

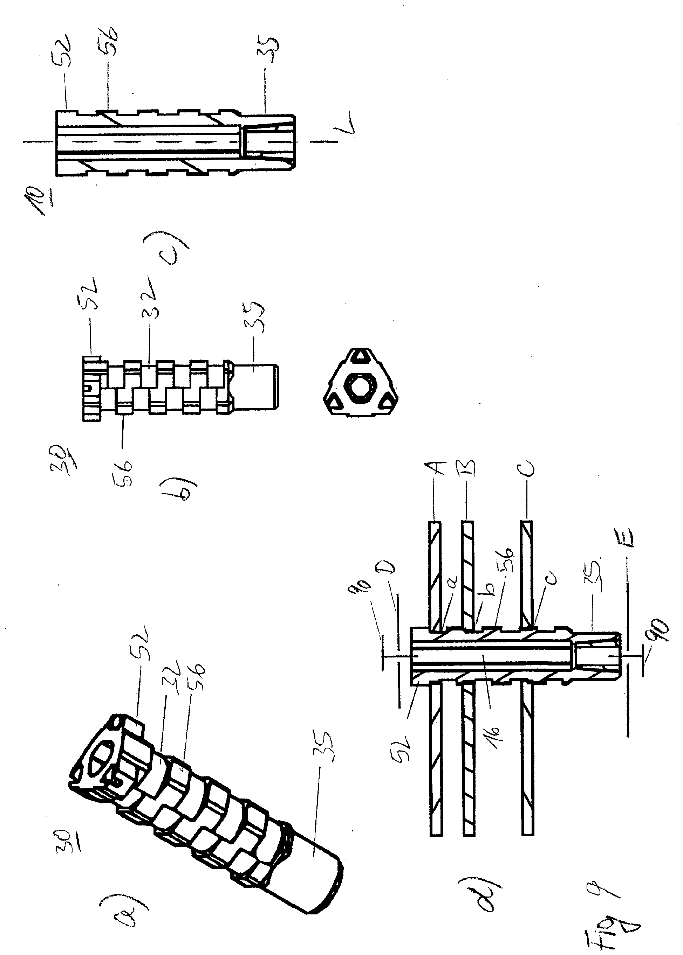

Figure 9 shows a preferred embodiment of the fastening element 10 having circumferential ribs or webs 56 extending on a constant axial position with respect to the longitudinal axis L of the fastening element 30. Further preferred, these circumferential ribs or webs 56 are arranged at several axial positions so that a plurality of circumferential ribs 56 is axially distributed along the fastening element 30/10.

These circumferential ribs 56 provide a support for an inner edge of a component opening a; b; c to facilitate the positioning of the components A; B; C. According to one embodiment, the circumferential ribs 56 extend completely around the base body 32.

According to a further embodiment, the circumferential ribs or webs 56 cover an angle of 120° around the longitudinal axis L.

Additionally preferred, each circumferential rib 56 covering an angle of about 80° to 120° is positioned at an individual axial position with respect to the longitudinal axis L of the fastening element 10/30. Thereby, an exact positioning and retaining of the components A; B; C is achieved.

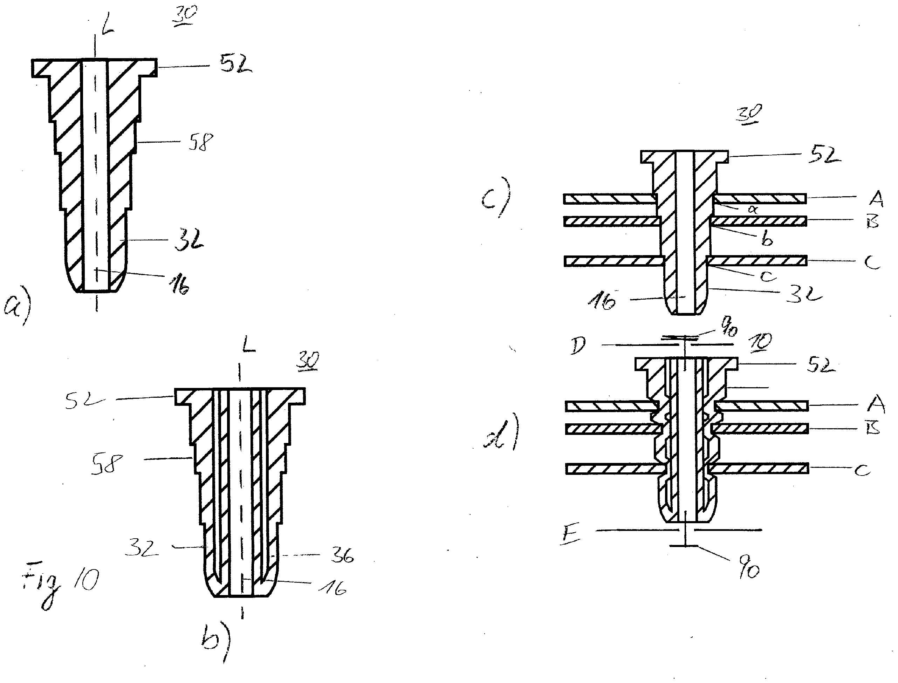

The further preferred embodiment of the fastening element 10 is illustrated in figure 10. It is similar in construction and function to the embodiment of figure 9.

The fastening element 10/30 of figure 10 preferably has a shape of a dowel which tapers in axial direction starting from the collar 52.

In the longitudinal direction of the fastening element 10/30, a plurality of stepped ribs or webs 58 is provided. Each stepped rib 58 is positioned at an individual axial position. These stepped ribs 58 support the edge of a component opening a; b; c.

Furthermore, the dowel shape of the fastening element 30 is preferably used for component openings A; B; C; D having a different, in particular decreasing, diameter.

The present invention further provides a method for fastening the at least two components A, B, C, D having the component opening a, b, c,d, respectively, to each other, preferably in a spaced apart relation, by means of the fastening element 10/30 according to one of the above described constructions. The method comprises the following steps: a. arranging the at least two components A, B, C, D such that the component openings a, b, c, d are aligned to each other, b. inserting the fastening element 30 into the at least two component openings a, b, c, d, c. applying a defined stimulus to the fastening element 30 inserted into the component openings a, b, c, d, preferably thermal energy, so that the fastening element is transferred to the second condition and the fastening element 30 expands laterally beyond the component openings a, b, c, d, thereby locking the components in position.

According to a preferred embodiment of the present invention, the component openings a, b, c, d have a polygonal shape. The polygonal shape preferably supports the connecting and/or anchoring of the fastening element 10/30 within the component openings a, b, c, d. Nevertheless, it is also preferred to use a component opening a, b, c, d having a circular or an elliptical or an elongatd shape for receiving the fastening element 10/30.

According to a preferred embodiment of the fastening method, the stimulating step involves heating the fastening element approximately 10 ° above the glass transition temperature of the shape memory polymer of the fastening element.

As further preferred, the method comprises the further step: arranging a further component D having a component opening d adjacent to an entrance opening to the inner channel 16 of the fastening element 10/30 and fastening the further component D to the fastening element 10/30 by means of a connecting element 90 extending through the component opening d of the further component D and into the inner channel 16 of the fastening element 10/30.

According to a preferred embodiment of the present invention, the further component D is connected to the fastening element 30 before applying the stimulus. It is also preferred, connecting the further component D to the fastening element 10 by means of the connecting element 90 after the stimulus was applied and the the fastening element 10 was anchored within the other components A, B, C.

According to another preferred embodiment of the fastening method, it comprises the further step of enabling positioning of the components on the fastening element by means of a collar surrounding the fastening element.

For connecting the components A, B, C, the fastening element 30 is inserted into the respective component opening a, b, c of each component A, B, C.

According to a preferred embodiment of the fastening element 30, the outer diameter of the fastening element 30 is slightly smaller as compared to the inner diameter of the component openings a, b, c.

According to a further preferred embodiment of the fastening element 30, the outer diameter of the fastening element 30 is slightly larger as compared to the inner diameter of the component openings a, b, c. This dimensioning supports a friction-type connection between the fastening element 30 and the component A, B, C, respectively.

To additionally support the installation of the fastening element 30 within the component openings a, b, c, the functional outer structure 50 using different configurations is used.

Furthermore, the preferred collar 52 used in several preferred configurations of the fastening element 30 facilitates the positioning and arrangement of the fastening element 30 within the component openings a, b, c.

### 6. List of reference signs

- 10: fastening element in the initial state
- 12: vertices
- 14: sides
- 16: inner channel
- 18: circumferential inner wall
- 20: circle surrounding the cross-section of the fastening element in the initial state
- 30: fastening element in the programmed state (first state)
- 32: hollow cylindrical base body
- 33: hollow threaded shaft
- 34: circumferential outer wall
- 35: receiving inner thread
- 36: circumferential inner wall
- 38: polygonal rim
- 40: short side of the rim of the base body 32
- 42: long side of the rim of the base body 32
- 44: circle surrounding the cross-section of the base body 32
- 50: functional outer structure
- 52: collar
- 54: helically extending ribs
- 56: circumferential ribs
- 58: stepped ribs
- 90: connecting element
- 92: sealing element
- 94: cable
- A, B, C, D: components
- a, b, c: component openings
- 1: deformation during programming of the shape memory polymer
- T₁₀, T₃₂: radial wall thickness

## Claims

1. A fastening element (30) made of a shape memory polymer and being adapted for connecting at least a first component (A) with a first component opening (a) and a second component (B) with a second component opening (b) with each other, by arranging the fastening element (30) in a first condition of the shape memory polymer in at least the first and the second component opening a, b and after that, transferring it from the first condition to a second condition as a reaction to a defined stimulus, so that in the second condition, the fastening element (10) has at least a larger outer diameter than in the first condition, wherein in the first condition, the fastening element (30) comprises the following features:
a. a hollow-cylinder like base body (32) with a circumferential outer wall (34) and a circumferential inner wall (36),
b. at least at one axial end, the hollow-cylinder like base body (32) comprises an entry hole into an inner channel (16), passing through, preferably entirely, the hollow-cylinder like body,
c. the hollow-cylinder like base body (32) has a cross sectional form with a polygonal outer rim (38) and a central opening of the inner channel (16).

2. The fastening element (30) according to claim 1, in which the polygonal outer rim (38) consists of a first and a second plurality of sides 40, 42 having equal length, with the first and the second plurality each comprising at least three sides (40, 42).

3. The fastening element (30) according to claim 2, in which the sides (40) of equal length of the first plurality are shorter than the sides (42) of equal length of the second plurality as well as sides (40; 42) of equal plurality do not adjoin each other.

4. The fastening element (30) according to claim 3, in which in the second condition, individual vertices (12) which are directed to the radial outside are formed in the outer rim (38) from the sides (42) of equal length of the second plurality.

5. The fastening element (30) according to one of the preceding claims, in which the hollow cylinder like base body (32) has a functional structure (50) projecting to the radial outside, which extends at least over axial partial portions of the fastening element (30).

6. The fastening element (30) according to claim 5, in which the functional structure (50) has a plurality of band-like webs (54, 56)
a. extending around the inner channel (16) in multiple segments (56), with individual segments being arranged to each other with an axial offset, or
b. extending helix-like around the inner channel (16).

7. The fastening element (30) according to claim 5, in which the functional structure comprises a plurality of radial steps (58) being arranged in axial direction and having different axial heights.

8. The fastening element (30) according to one of the preceding claims, in which the at least one entry opening into the inner channel (16) has a thread insert for fastening a threaded element (90).

9. The fastening element (30) according to one of the preceding claims, in which a circumferential collar is provided at an axial end of the fastening element (30).

10. The fastening element (30) according to claim 9 in which the circumferential collar (52) comprises a sealing element so as to establish a sealing by means of a component abutting the collar (52).

11. A connection of a first component (A) with a first component opening (a) and a second component (B) with a second component opening (b) with a fastening element (30) according to one of claims 1 to 10, which is arranged in the first (a) and in the second component opening (b) and has been transferred into the second condition.

12. The connection according to claim 11 in which a third component (D) is fastened to the fastening element (30) in which a connecting element (90) has been fastened in the inner channel (16) through a third fastening opening in the third component (D).

13. A method for fastening at least two components having a component opening, respectively, to each other, preferably in a spaced apart relation, by means of a fastening element according to one of the preceding claims 1 to 10, the method comprising the following steps:
a. arranging the at least two components such that the component openings are aligned to each other,
b. inserting the fastening element into the at least two component openings,
c. applying a defined stimulus to the fastening element inserted into the component openings, preferably thermal energy, so that the fastening element is transferred to the second condition and the fastening element expands laterally beyond the component openings, thereby locking the components in position.

14. The method for fastening according to independent claim 13, in which the stimulating step involves heating the fastening element approximately 10 ° above the glass transition temperature of the shape memory polymer of the fastening element.

15. The method according to claim 13 or 14, comprising the further step:
arranging a further component having a component opening adjacent to an entrance opening to the inner channel of the fastening element, and fastening the further component to the fastening element by means of a connecting element extending through the component opening of the further component and into the inner channel of the fastening element.

16. The method according to any of the claims 13 to 15, comprising the further step of enabling positioning of the components on the fastening element by means of a collar surrounding the fastening element.
